# EUROPEAN PATENT SPECIFICATION

(11) **EP 4 195 913 B1**
(45) Date of publication and mention of the grant of the patent: **18.02.2026**
(21) Application number: 21801601.2
(22) Date of filing: 23.09.2021
(51) Int. Cl.: A01G 31/06

(54) **CROP PRODUCTION SYSTEM AND METHOD**
SYSTEM UND VERFAHREN ZUR HERSTELLUNG VON NUTZPFLANZEN
SYSTÈME ET PROCÉDÉ DE PRODUCTION DE VÉGÉTAUX

(30) Priority: 23.09.2020 GB 202015000
(43) Date of publication of application: 21.06.2023
(73) Proprietor: Vertical Future Limited, London SE8 4SA (GB)
(72) Inventor: BURROWS, James, London, Greater London SE8 4SA (GB); JAMES, Darren, London, Greater London SE8 4SA (GB); BROMLEY, Jennifer, London, Greater London SE8 4SA (GB); CHENHALLS-WALKER, Sebastien, London, Greater London SE8 4SA (GB)
(74) Representative: Williams Powell
(86) International application number: PCT/GB2021/052477
(87) International publication number: WO 2022/064200

(56) References cited:
- EP-A1- 2 491 784
- DE-A1- 3 404 300
- JP-A- 2017 063 712

## Description

### Field of the Invention

The present invention relates to a crop production system and method that are particularly applicable to aeroponic and hydroponic cultivation of crops.

### Background to the Invention

Changes to the environment, increased use of pesticides, supply chain problems, overall population growth and concentration of populations in urban areas means that different ways of cultivating crops are needed.

Indoor crop production systems are desired that enable research and testing of different crop varieties as well as scalable crop production. Such systems may use aeroponic nutrient delivery (crop cultivation in which the crop roots hang suspended in the air while a nutrient solution is delivered to them in the form of a fine mist) and/or hydroponic nutrient delivery (crop cultivation in sand, gravel, liquid or other substrates, with added nutrients but without soil) is often chosen for indoor crop cultivation as the nutrient delivery can be more readily controlled for the particular crops and a crop compatible soil is not needed.

However, aeroponic and hydroponic production systems and their associated support and nutrient delivery mechanisms take up considerable space impacting the amounts of crops that can be grown at any one time and the viability of such implementations. Additionally, purchase costs tend to be high and systems are generally not extendible or scalable. JP2017063712 discloses a plant culture apparatus.

### Statement of Invention

According to an aspect of the present invention, there is provided a crop production system as claimed in claim 1.

Each conduit may comprise a plurality of wheels configured to convey the crop trays along the route. The wheels may be casters, belt type tracks or driven or free wheels, for example.

One or more of the conduits comprises a liquid conduit. This may be for hydroponic feeding and/or for conveying the trays. A mix of different conduit types may be used, some using wheels, others liquid or other forms of conveyance etc.

The crop production system may further comprise a crop tray configured to float in the liquid conduit, the liquid conduit including side walls configured to restrict non-longitudinal movement of the crop trays, wherein the liquid conduit defines a substantially linear route along which floating crop trays sequentially float.

A base of the liquid conduit may have a profile that substantially corresponds to, and guides, a correspondingly shaped profile of an underside of each floating crop tray.

The liquid conduit may have a central longitudinal projection and each crop tray has is a substantially inverted 'U' shape to span the longitudinal projection when in the liquid conduit.

The liquid conduit may include a liquid propulsion system comprising a liquid feed at a first longitudinal end of the liquid conduit and a drain at an opposite longitudinal end of the liquid conduit whereby passage of liquid in the liquid conduit is controllable by the liquid propulsion system to create a current. As well as for implementations using it for conveyance and feeding, water flowing underneath the wheeled system can be used for heat dissipation and debris removal

The drain preferably includes a filter configured to remove waste from the liquid.

The liquid propulsion system may be configured to direct liquid expelled at the drain back into the conduit at the liquid feed.

The liquid may include a crop nutrient.

Each crop tray may comprise a carrier and a crop support, the crop support being connectable to the carrier, the carrier being configured to move or be moved along the conduit.

The crop production system may comprise a plurality of carriers of differing configurations selected from a set including buoyancy, crop height, crop root position with respect to the liquid in the conduit for hydroponic treatment, and root ventilation for aeroponic treatment.

Each crop tray may be configured to have buoyancy characteristics whereby a degree of submersion of the crop tray in the liquid conduit is substantially proportional to the weight of crops in the crop tray.

The crop production system may further comprise an automated loader configured to receive a tray at the end of one of the conduits and insert the tray into another conduit in the stack.

The crop production system may further comprise a controller, the support being reconfigurable during use by the controller whereby the distance between one conduit and the next conduit in the stack is changeable by the controller according to a schedule. The conduits in the stack may be grouped, the controller being configured to reconfigure the distance between conduits according to the schedule whereby distance between conduits varies according to the schedule and their respective group.

The crop production system may further comprise a plurality of supports mounted adjacent to each other with respect to the longitudinal axis of the conduits, the plurality of supports being configured to be moveable with respect to each other to provide access therebetween.

The supports may be mounted on wheels that run along tracks, the tracks being oriented substantially perpendicularly to the longitudinal axis of the conduits.

The crop production system may further comprise a lighting system on an underside of one of the conduits configured to project light below the conduit.

The controller being configured to activate the lighting system according to the schedule.

The liquid conduit may be used as a heat sink for the lighting system.

According to another aspect of the present invention, there is provided a crop production method as claimed in claim 15.

### Brief Description of the Drawings

Embodiments of the present invention will now be described by way of example only with reference to the accompanying drawings in which:
Figure 1a is a schematic diagram of aspects of a crop production system according to an embodiment;
Figure 1b is a lateral cross-sectional view of Figure 1a;
Figure 2 is a perspective view of a crop tray suitable for use with the embodiment of Figure 1;
Figure 3 is a schematic diagram of aspects of a crop production system according to another embodiment;
Figures 4a and 4b are lateral cross-sectional views of liquid conduits suitable according to a preferred embodiment for use in the embodiment of Figure 3;
Figures 4c and 4d are schematic views of aspects of conduits suitable for use in the embodiment of Figure 3;
Figure 5 is a schematic diagram of a crop tray suitable for use in the embodiment of Figure 3;
Figures 6a-c are schematic diagrams of aspects of a crop production system according to an embodiment;
Figure 7 is a schematic diagram of a crop production facility in which the embodiment of

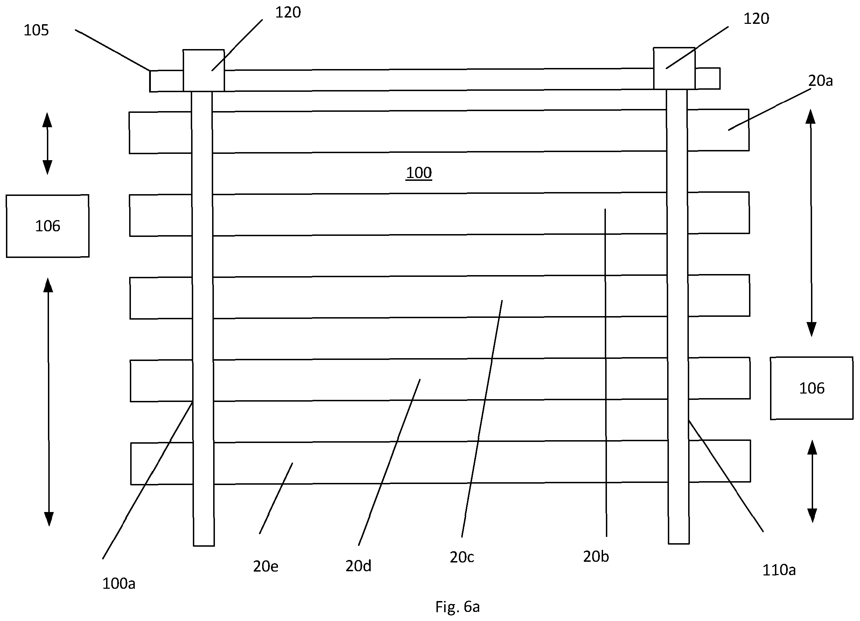

Figure 6a-c has been extended to include multiple stacks;

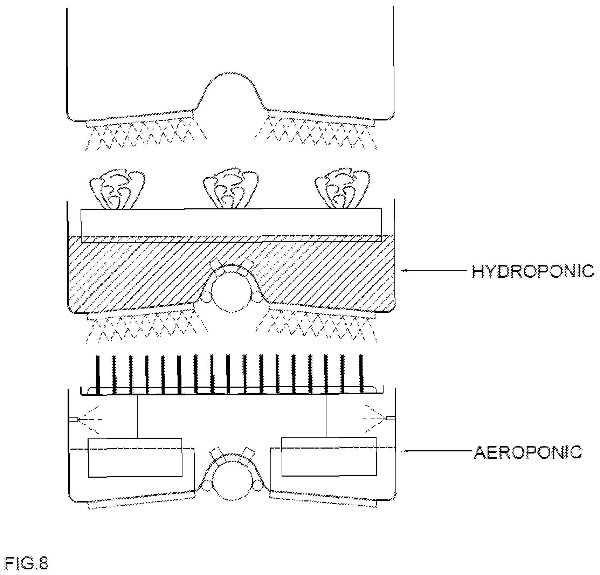

Figure 8 is a schematic diagram illustrating example configurations of the crop tray and liquid conduit when configured for hydroponic and aeroponic nutrient supply.

### Detailed Description

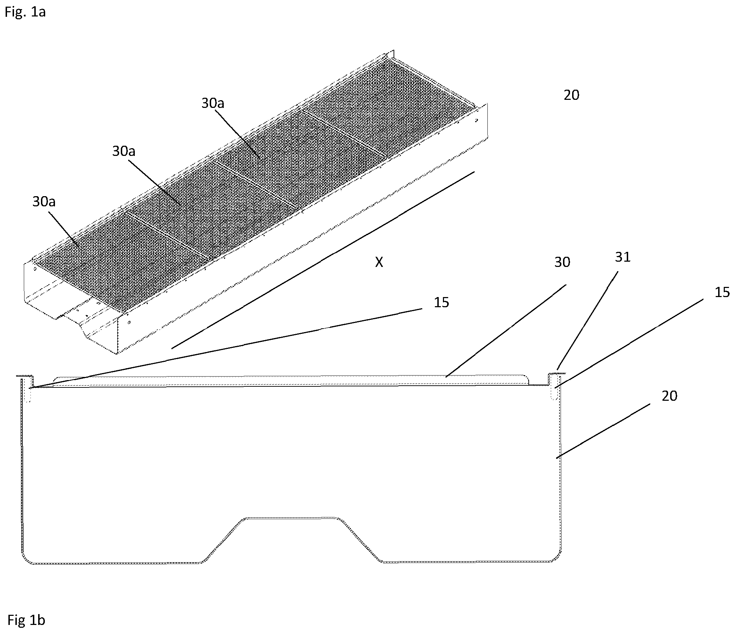

Figure 1a is a schematic diagram of aspects of a crop production system according to an embodiment. Figure 1b is a cross-section of the system of Figure 1a.

The crop production system 10 includes a conduit 20 having a longitudinal axis X. The crop production system further includes a plurality of crop trays 30a, 30b. Each of the plurality of crop trays 30a, 30b, 30c is configured to roll along wheels 15 mounted longitudinally along the side walls 21 of the conduit. The trays include a lip 31 configured to sit on and abut the wheels 15 to restrict lateral movement of the crop trays 30a, 30b, 30c. The conduit defines a substantially linear route along which the plurality of crop trays sequentially travel.

Preferably, travel of the trays along the conduit is by gravity (the conduit may be sloped or slightly raised at one end), although optionally some or all of the wheels may be driven by a drive. Trays can be loaded and uploaded manually or automatically. In the case of automated operation, a robotic loader and/or unloader may be positioned at one or both ends of the conduit to push on and/or pull off trays. Such a robotic drive may be sufficient to drive the trays along the conduit or may be used in conjunction with gravity and/or drive applied through the wheels in the conduit. The robotic loader may include wheels, a conveyor, a grabbing arm or the like to add/remove trays. It may also elevate/descend so as to move trays from one conduit to another.

The conduit may include a hydroponic and/or aeroponic nutrient feed as described below.

Further details on the crop production system 10, the conduit 20 and crop trays 30a, 30b, 30c are set out below. It is to be noted that the various described elements are modular in nature and may be combined in different ways during implementation. The following embodiments are to be taken as examples of possible implementations and it will be appreciated that different numbers and types of conduits and crop trays can be used together.

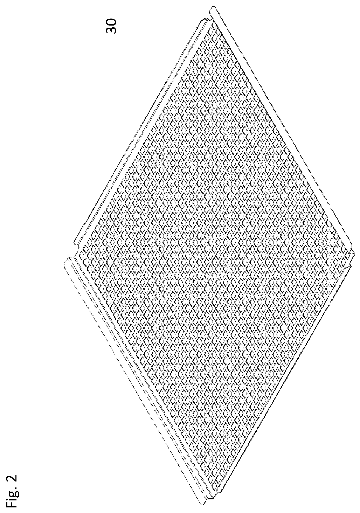

Each tray may be of the form of a mesh as shown in Figure 2 onto which plants can be positioned, the spacing of the mesh enabling roots to pass through. It will be appreciated that other tray designs are possible, for example to support plants that are in plug form and also larger or more delicate plants whose root systems may need support, guidance and/or protection.

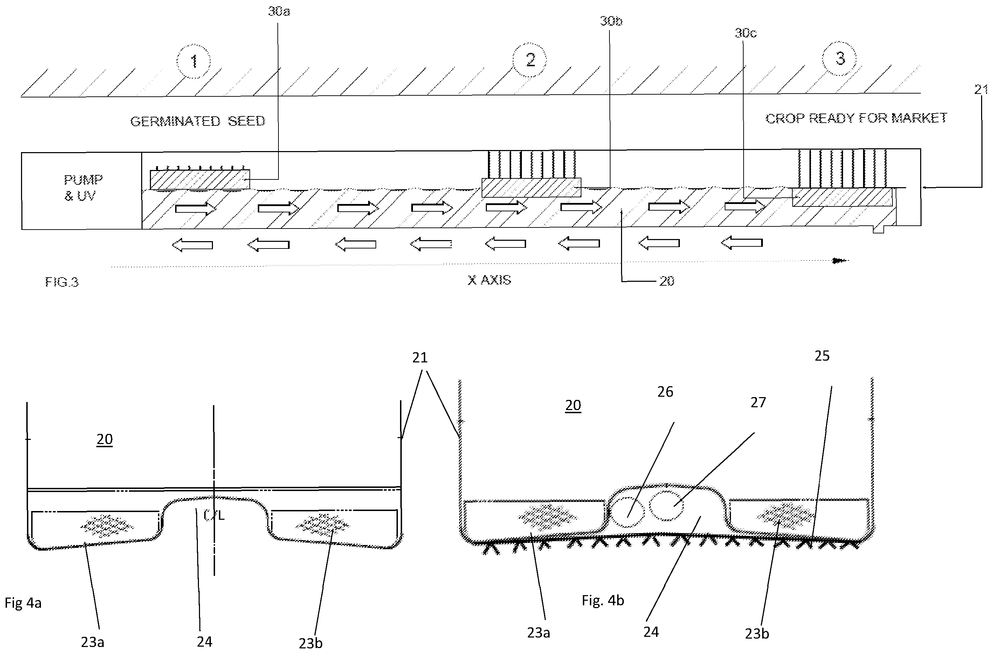

Figure 3 is a schematic diagram of aspects of a crop production system according to an alternative embodiment.

In this embodiment, the crop production system 10 includes a liquid conduit 20 having a longitudinal axis X. The crop production system further includes a plurality of crop trays 30a, 30b. Each of the plurality of crop trays 30a, 30b, 30c is configured to float in the liquid conduit 20 along the longitudinal axis X. The liquid conduit includes side walls 21 configured to restrict lateral movement of the crop trays 30a, 30b, 30c. The liquid conduit defines a substantially linear route along which the plurality of crop trays sequentially float.

It will be noted in the illustrated embodiment that an optional feature is used which is described in more detail below - the crop trays are configured such that their buoyancy is balanced with respect to crop weight. As crops grow, the crop tray slightly sinks under the weight such that the height of the crop may remain substantially the same from left (germinated) to right (ready for harvest/market).

Figure 4a is a lateral cross-sectional view of a conduit suitable for use in the embodiment of Figure 1 or 3. The liquid conduit 20 includes side walls 21 that, in combination with a base 22 contain liquid 23a, 23b within the conduit 20. The base includes a central projection 24. In operation, the liquid 23a, 23b may be provided at a volume so as to sit either side of the projection 24 (as illustrated) or it may be provided at a volume so as to span the central projection 24 as shown in Figure 9. The longitudinal axis X of Figure 1 or 3 runs through the centre line (marked C/L) in Figure 4a.

It will be appreciated that the same conduit can be used for both the implementation of Figures 1 and 2 and the embodiment of Figure 1 can be switched in operation to that of Figure 2 by provision of liquid at an appropriate level in the conduit and use of floating trays as described below.

In a preferred embodiment, shown in Figure 4b the conduit 20 (of Figure 1 or 2) has a lighting system 25 mounted on or in the base 22 and configured to project light below the conduit. In and advantageous arrangement, when the conduit holds liquid 23a, 23b, the liquid acts as a heat sink for the lighting system 25.

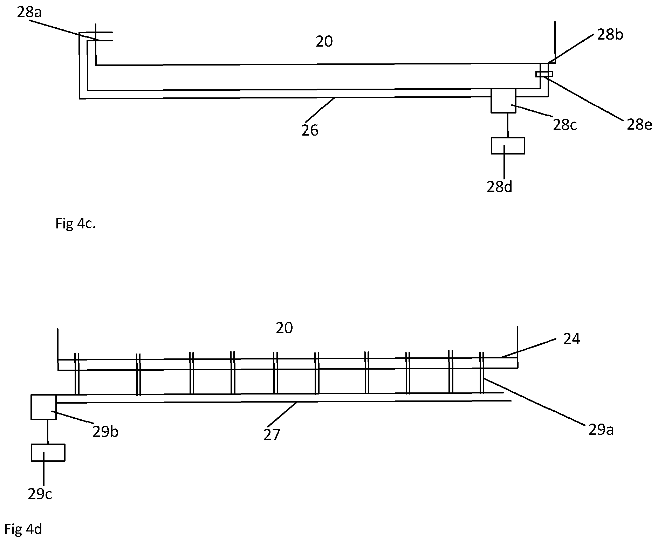

Optionally, as shown in Figure 4b, the liquid conduit includes piping 26, 27 in the projection 24. The piping 26, 27 preferably supports one or more subsystems of the crop production system 20. One subsystem supported by the piping 26 is a liquid propulsion system 28a-e as shown in Figure 4c. In a preferred embodiment, the liquid propulsion system includes a liquid feed 28a at a first longitudinal end of the liquid conduit 20 and a drain 28b at an opposite longitudinal end of the liquid conduit 20. Passage of liquid in the liquid conduit is controllable by the liquid propulsion system to create a current to direct to the floating crop trays. In one embodiment, the liquid propulsion system includes a pump 28c configured to pump liquid leaving the conduit at the drain 28b to the liquid feed 28a via the piping 26. In one embodiment, the pump is controllable via a control system 28d. In one embodiment, the liquid propulsion system includes a filter 28e configured to filter particulate matter and other undesirable media from the liquid between the drain 28b and inlet 28a. The filter may also include UV treatment or the like.

Optionally, a crop nutrient feed may be provided to introduce (and optionally measure and otherwise control) crop nutrients in the liquid between the drain 28b and the inlet 28a. Liquid in the conduit 20 in this way is circulated and controlled to provide propulsion to the crop trays and optionally a nutrient source and further optionally a waste outlet.

The conduit may be inclined (either due to the way it is mounted or by a sloping of the base 22) so as to introduce a gradient from the inlet 28a towards the outlet 28b. This may be used as an alternative or in addition to the current introduced by the pump circulating the liquid to drive the crop trays.

Continual movement of the liquid enables removal of waste and debris and greatly reduces the risk of build-up of deleterious microorganisms and algae on growing services. It also acts as a heat sink, enabling cooling of the lights suspended on the underside of the conduit.

As the liquid is re-circulated, the rate of recirculation will allow for aeration of the liquid, ensuring roots have an oxygenic environment to promote growth of the crop through ensuring sufficient oxygen is available for root zone respiration.

Another (optional) subsystem that may be supported by the piping 27 is an aeroponic nutrition system 29a-c as shown in Figure 4d. A further optional subsystem within the piping that may also be accommodated in the projection is that of a ventilation system. Such a ventilation system may have outlets directed towards the liquid conduit below, allowing for air circulation/movements in in the crop canopy in the stack immediately below.

In this embodiment, aeroponic feed outlets 29a are dispersed along the length of the central projection 24 that are fed via the piping 27 from a pneumatic air source 29b that is controllable by a controller 29c. Preferably, the joint between the central projection and each aeroponic feed outlets 29a is sealed to prevent leakage. In this manner, the aeroponic nutrition system can be present, even if the liquid conduit is used only for hydroponic nutrient feeding. Examples of different usages is shown in Figure 8 but it will be appreciated that the liquid level can be controlled by the liquid propulsion system so as to sit in channels either side of the central projection or else to be at a level such that it spans over the central projection.

The aeroponic feed may optionally sit inside the conduit and run along its base. In such an arrangement, pipework also runs along the base. It may be implemented as a number of modular aeroponic units that are either spaced along the base or else run sequentially along the base. Modularity aids maintenance in that units can be quickly swapped out in the event of a blockage etc. Placement of units in the conduit instead of projecting into the conduit also avoids holes in the conduit and reduces the risk of leakage.

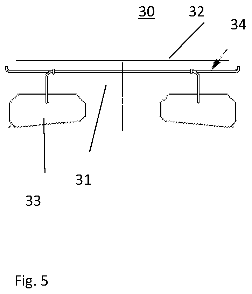

Figure 5 is a schematic diagram of a crop tray 30 suitable for use in the embodiment of Figure 3 and also suitable for use with the liquid conduit of Figure 4.

Each crop tray 30 has a substantially inverted 'U' shape to span the central projection 24 when in the liquid conduit 20. In the illustrated embodiment, the crop tray 30 is made from two modular components: a floating carrier 31 and a crop support 32. The crop support 32 is preferably connectable to the floating carrier 31 such that crops can be prepared, harvested etc away from the floating carrier 31. Additionally, having the crop support 32 separate to the floating carrier means that floating carriers of differing profiles, materials and/or buoyancy characteristics can be used depending on the crop or omitted entirely if the mechanical conveyance of Figure 1 is used.

The floating carrier 31 in the illustrated embodiment includes buoyant feet 33 mounted to a frame 34. Preferably, the buoyant feet have a size and shape to substantially span the width of the liquid conduit and also to span and be guided by the central projection 24 when the liquid level is such that the projection 24 is exposed. The side walls 21 prevent lateral movement of the crop trays 30 when the liquid level is over the central projection 24 and the for remainder of the time the central projection sits between the buoyant feet and guides the path of the crop trays 30.

In one embodiment, the frame 34 includes a central aperture such that when a crop support is connected to the frame, it is supported about its periphery by the frame 34 and roots of the crop can grow through the aperture towards the liquid conduit/central projection.

In a preferred embodiment, the crop production system may include carriers 31 with different characteristics. For example, carriers with different sized apertures may be provided so a carrier can be selected so as to maximise root access for light crops and maximise frame integrity for heavier plants. Similarly, carriers with different buoyancy characteristics (or carriers with buoyancy characteristics that can be controlled or changed) may be provided to accommodate different sized/weight crops. As will be appreciated from later described embodiments, control of buoyancy is advantageous because this in turn can be used to control crop height when the floating carrier is in a liquid conduit. As crop height is a normally uncontrollable variable in crop production systems, this is a particularly useful controllable feature. Being able to control crop height means that harmonised (or controlled) exposure to light etc can be provided independently of crop height/weight. This can also be achieved by appropriate sensors detecting height of crops on trays and raising/lowering the respective conduit (either mechanical or liquid based) as discussed below.

In one embodiment, each crop tray is configured to have buoyancy characteristics such that a degree of submersion of the buoyant feet of the crop tray in the liquid conduit is substantially proportional to the weight of crops in the crop tray.

Thus far, embodiments have been described based on crop trays travelling along a single liquid conduit. The rate of progression along the conduit does not need to be speedy and indeed may be many days. For example, the rate could be controlled (via the current in the conduit for example) so that crops have grown a required amount or otherwise received appropriate treatment during their passage from one end of the conduit to the other. A manual or robotic system may be used at each end to insert and remove crop trays.

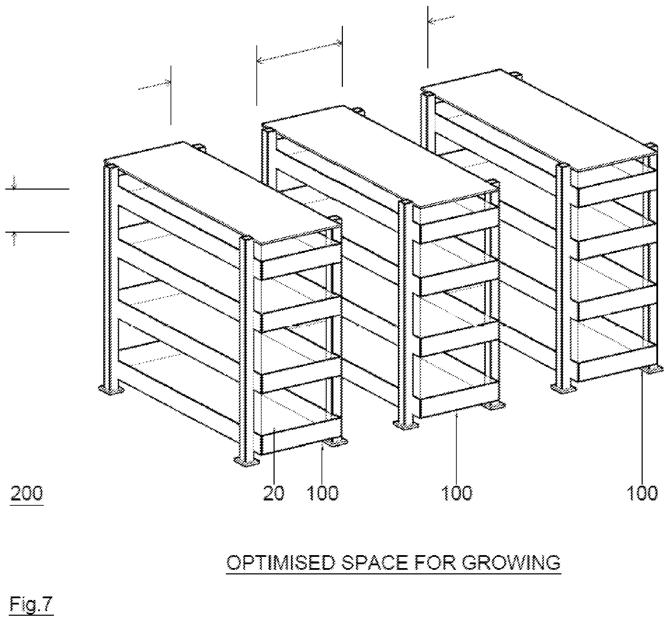

However, while an crop production facility can be formed from a single liquid conduit 20, conduits are designed to be scalable as described below. In a preferred embodiment shown in Figure 6a, the conduits are mounted in a suspended stacked configuration one-on-top-of-another. The number of conduits in a stack is variable. In a further preferred embodiment shown in Figure 7, a facility is formed from multiple stacks that are mounted side by side. In a preferred embodiment, the stacks can be installed immediately adjacent each other to maximise space usage but the facility includes a conveyance mechanism such as that described in more detail below that allows space between stacks to be opened up for access, maintenance etc.

Figures 6a-c are schematic diagrams of aspects of an crop production facility according to an embodiment that includes the crop production system of Figure 1.

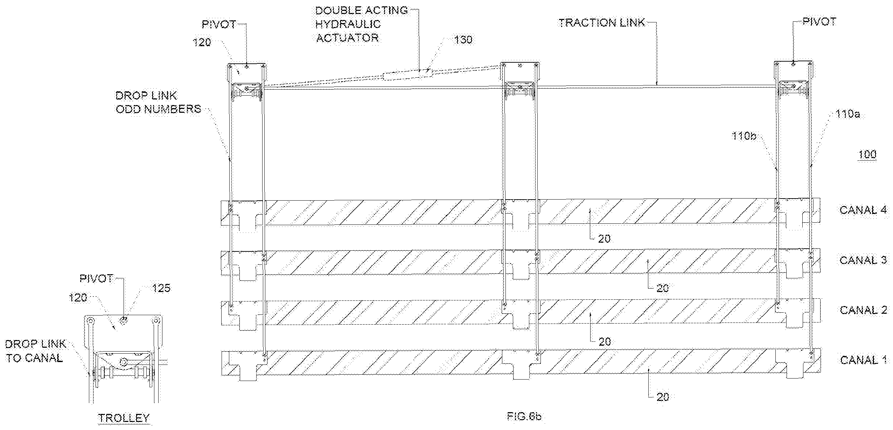

In this embodiment, a stack 100 is formed from multiple liquid conduits 20. A support 105 is configured to hold a plurality of the liquid conduits 20a-e in a suspended stacked configuration with one liquid conduit stacked on top of another. The support 105 is operable (preferably under the control of a computerised control system as described below) to move the stacked liquid conduits with respect to each other. In the illustrated embodiment, the support includes first and second sets of fixed arms 110a, 110b that are mounted to opposite sides of a pivoting member 120 in the manner shown in Figure 6b. When the pivoting member moves about a pivot point 125 (for example by a hydraulic actuator 130), the pivot member rotates causing one of the sets of fixed arms to move in an opposing direction to the other. A distal end of each arm is attached to a liquid conduit (with multiple arms being attached along the length of the conduit to ensure smooth motion). Movement of the arms 110a, 110b by the pivoting member 120 causes the conduits attached to one of the sets of arms to move relative to the conduits attached to the other set of arms. Alternating conduits in the stack are attached to alternate ones of the arm sets so that as one conduit is moved towards the pivot (in effect vertically raising the conduit), the next conduit(s) in the stack (above and below) are moving in the opposite direction. Rotation of the pivot in one direction opens up space between conduits and the neighbouring conduits in the stack while closing space between those next conduits and their neighbour in the stack (so in the example shown in Figure 5b, conduit (liquid conduit 20) 1 and 4 moves away from conduits 2 and 3 (while conduits 2 and 3 move towards each other). Rotation in the other direction reverses this.

It will be appreciated that other mechanisms such as cables and pulleys could be used in place of the fixed arms and/or pivot member.

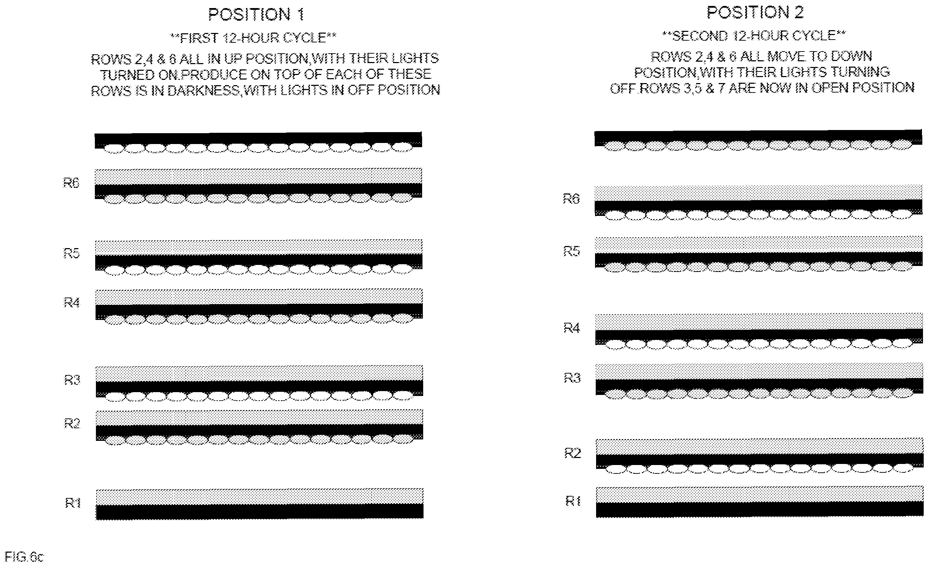

The reason for this alternating pattern of movement is shown in Figure 6c - because lighting is preferably installed on the underside of some or all of the conduits, a diurnal (or other) rhythm can be set to apply lighting to crops. Space only needs to be created between conduits in the stack for those periods when light is to be applied.

Preferably a computerised control system controls or coordinates both the relative movement of the conduits in the stack and also the operation of the lighting. Preferably, this is done according to a schedule which may, for example, be dependent on crop type, age or other factors.

The vertical movement of the conduits preferably allows light exposure can be adjusted either mechanically (by increasing or reducing the distance between the tray and the light) or electronically (dimming the light).

Optionally, lighting may only be installed on the underside of some conduits and/or not along the entire length. In such an arrangement, control of on/off may not be needed or may be controlled by a separate sensor detecting when trays needing light is passing under the respective light.

The number of conduits in a stack is variable.

Figure 7 is a schematic diagram of an crop production facility in which the embodiment of Figure 6a-c has been extended to include multiple stacks;

Figure 7 illustrates an embodiment in which multiple stacks 100 of the type illustrated in Figure 6a-c may be installed together to form an crop production facility/system 200.

Although the stacks 100 are shown in a spaced apart configuration with aisles between them, this is changeable as described below and the default configuration is for stacks 100 to be substantially adjacent and maximise floor space usage.

Preferably, the system 200 is formed from multiple stacks 100 that are mounted side by side, adjacent to each other with respect to the longitudinal axis of the liquid conduits 20. Each stack is configured to be moveable with respect to other stacks to provide access therebetween.

Preferably, the stacks 100 are each mounted on wheels that run along tracks (which may be above and/or below the stacks), the tracks being oriented substantially perpendicularly to the longitudinal axis of the liquid conduits 20.

Nutrient supply, lighting programme and other factors can be individually controlled per conduit, meaning that different environments and programmes can be provided for different crops (or to test how different crops react to particular environments). Additionally, a liquid conduit may provide a staged/varied environment along its length - for example, lighting may be split into panels that are individually controllable. In one embodiment, a conduit may be split into three zones along its length with each zone being controllable to have differing light intensity and/or duration. to account for 3 stages of crop growth (vegetative, reproductive, and ripening). Nutrients may also be controlled in a similar way to vary the nutrients fed to crops according to zone (and the segmentation into nutrient zones may be the same or different to the lighting zones).

Figure 8 is a schematic diagram illustrating example configurations of the crop tray and liquid conduit when configured for hydroponic and aeroponic nutrient supply.

It is to be appreciated that certain embodiments of the invention as discussed below may be incorporated as code (e.g., a software algorithm or program) residing in firmware and/or on computer useable medium having control logic for enabling execution on a computer system having a computer processor. Such a computer system typically includes memory storage configured to provide output from execution of the code which configures a processor in accordance with the execution. The code can be arranged as firmware or software, and can be organized as a set of modules such as discrete code modules, function calls, procedure calls or objects in an object-oriented programming environment. If implemented using modules, the code can comprise a single module or a plurality of modules that operate in cooperation with one another.

It will be appreciated that although the above embodiments are focused on hydroponic and aeroponic cultivation, other approaches could also or alternatively be used such as aquaponic cultivation.

Although illustrated embodiments of the present invention have been described, it should be understood that various changes, substitutions, and alterations can be made by one of ordinary skill in the art without departing from the present invention which is defined by the recitations in the claims below.

## Claims

1. A crop production system (10), comprising a support holding a plurality of conduits in a suspended, stacked, configuration with one conduit stacked on top of another, the support being operable to move the stacked conduits with respect to each other, wherein each conduit is configured to receive and sequentially convey a plurality of crop trays (30a, 30b, 30c) along a route from one end of the respective conduit to an opposite end, one or more of the conduits comprising a liquid conduit (20).

2. The crop production system (10) of claim 1, wherein each conduit comprises a plurality of wheels (15) configured to convey the crop trays (30a, 30b, 30c) along the route.

3. The crop production system (10) of claim 1, further comprising a crop tray configured to float in the liquid conduit (20), the liquid conduit (20), including side walls (21) configured to restrict non-longitudinal movement of the crop trays (30a, 30b, 30c), wherein the liquid conduit (20), defines a substantially linear route along which floating crop trays (30a, 30b, 30c) sequentially float.

4. The crop production system (10) of claim 3, wherein a base (22) of the liquid conduit (20) has a profile that substantially corresponds to, and guides, a correspondingly shaped profile of an underside of each floating crop tray (30a, 30b, 30c).

5. The crop production system (10) of claim 4, wherein the liquid conduit (20) has a central longitudinal projection (24) and each crop tray has is a substantially inverted 'U' shape to span the longitudinal projection (24) when in the liquid conduit (20).

6. The crop production system (10) of any of claims 1 to 5, wherein the liquid conduit (20) includes a liquid propulsion system (28a-e) comprising a liquid feed (28a) at a first longitudinal end of the liquid conduit (20) and a drain (28b) at an opposite longitudinal end of the liquid conduit (20) whereby passage of liquid (23a, 23b) in the liquid conduit (20) is controllable by the liquid propulsion system (28a-c) to create a current.

7. The crop production system (10) of claim 6, wherein the drain (28b) includes a filter (28e) configured to remove waste from the liquid (23a, 23b).

8. The crop production system (10) of any of claim 3, wherein each floating crop tray comprises a floating carrier and a crop support, the crop support being connectable to the floating carrier, the floating carrier being configured to float in the liquid conduit (20).

9. The crop production system (10) of any preceding claim, comprising a plurality of carriers of differing configurations selected from a set including buoyancy, crop height, crop root position with respect to the liquid (23a, 23b) in the conduit for hydroponic treatment, and root ventilation for aeroponic treatment (29a).

10. The crop production system (10) of any preceding claim, further comprising a controller (29c), the support being reconfigurable during use by the controller (29c) whereby the distance between one conduit and the next conduit in the stack is changeable by the controller (29c) according to a schedule.

11. The crop production system (10) of claim 10, wherein the conduits in the stack are grouped, the controller (29c) being configured to reconfigure the distance between conduits according to the schedule whereby distance between conduits varies according to the schedule and their respective group.

12. The crop production system (10) of any preceding claim, further comprising a plurality of supports mounted adjacent to each other with respect to the longitudinal axis of the conduits, the plurality of supports being configured to be moveable with respect to each other to provide access therebetween.

13. The crop production system (10) of any preceding claim, further comprising a lighting system (25) on an underside of one of the conduits configured to project light below the conduit.

14. The crop production system (10) of claim 13 when dependent on claim 10 or 11, the controller being configured to activate the lighting system (25) according to the schedule.

15. A crop production method, comprising holding, in a system according to claim 1, a plurality of conduits in a suspended, stacked, configuration with one conduit stacked on top of another, operating the support to move the stacked conduits with respect to each other and receiving and sequentially conveying a plurality of crop trays (30a, 30b, 30c) along a route from one end of the respective conduit to an opposite end, one or more of the conduits comprising a liquid conduit (20).

## Patentansprüche

1. Pflanzenproduktionssystem (10), das einen Träger aufweist, der eine Vielzahl von Leitungen in einer aufgehängten, gestapelten Konfiguration hält, wobei eine Leitung auf einer anderen gestapelt ist, wobei der Träger betreibbar ist, um die gestapelten Leitungen in Bezug zueinander zu bewegen, wobei jede Leitung konfiguriert ist, um eine Vielzahl von Pflanzenschalen (30a, 30b, 30c) aufzunehmen und nacheinander entlang eines Weges von einem Ende der jeweiligen Leitung zu einem gegenüberliegenden Ende zu befördern, wobei eine oder mehrere der Leitungen eine Flüssigkeitsleitung (20) umfassen.

2. Pflanzenproduktionssystem (10) nach Anspruch 1, wobei jede Leitung eine Vielzahl von Rädern (15) umfasst, die konfiguriert sind, um die Pflanzenschalen (30a, 30b, 30c) entlang des Weges zu befördern.

3. Pflanzenproduktionssystem (10) nach Anspruch 1, das ferner eine Pflanzenschale umfasst, die konfiguriert ist, in der Flüssigkeitsleitung (20) zu schwimmen, wobei die Flüssigkeitsleitung (20) Seitenwände (21) umfasst, die konfiguriert sind, eine nicht-längsgerichtete Bewegung der Pflanzenschalen (30a, 30b, 30c) einzuschränken, wobei die Flüssigkeitsleitung (20) einen im Wesentlichen linearen Weg definiert, entlang der schwimmende Pflanzenschalen (30a, 30b, 30c) sequentiell schwimmen.

4. Pflanzenproduktionssystem (10) nach Anspruch 3, wobei eine Basis (22) der Flüssigkeitsleitung (20) ein Profil aufweist, das im Wesentlichen einem entsprechend geformten Profil einer Unterseite jeder schwimmenden Pflanzenschale (30a, 30b, 30c) entspricht und diese führt.

5. Pflanzenproduktionssystem (10) nach Anspruch 4, wobei die Flüssigkeitsleitung (20) einen zentralen Längsvorsprung (24) aufweist und jede Pflanzenschale eine im Wesentlichen invertierte "U"-Form hat, um den Längsvorsprung (24) zu überspannen, wenn sie sich in der Flüssigkeitsleitung (20) befindet.

6. Pflanzenproduktionssystem (10) nach einem der Ansprüche 1 bis 5, wobei die Flüssigkeitsleitung (20) ein Flüssigkeitsantriebssystem (28a-e) umfasst, das eine Flüssigkeitszufuhr (28a) an einem ersten Längsende der Flüssigkeitsleitung (20) und einen Abfluss (28b) an einem gegenüberliegenden Längsende der Flüssigkeitsleitung (20) umfasst, wodurch der Durchgang von Flüssigkeit (23a, 23b) in der Flüssigkeitsleitung (20) durch das Flüssigkeitsantriebssystem (28a-c) steuerbar ist, um eine Strömung zu erzeugen.

7. Pflanzenproduktionssystem (10) nach Anspruch 6, wobei der Abfluss (28b) einen Filter (28e) umfasst, der konfiguriert ist, um Abfall aus der Flüssigkeit (23a, 23b) zu entfernen.

8. Pflanzenproduktionssystem (10) nach einem des Anspruchs 3, wobei jede schwimmende Pflanzenschale einen schwimmenden Träger und einen Pflanzenträger aufweist, wobei der Pflanzenträger mit dem schwimmenden Träger verbindbar ist und der schwimmende Träger konfiguriert ist, um in der Flüssigkeitsleitung (20) zu schwimmen.

9. Pflanzenproduktionssystem (10) nach einem der vorhergehenden Ansprüche, das eine Vielzahl von Trägern mit unterschiedlichen Konfigurationen aufweist, die aus einem Satz ausgewählt sind, der den Auftrieb, die Pflanzenhöhe, die Position der Pflanzenwurzeln in Bezug auf die Flüssigkeit (23a, 23b) in der Leitung für eine hydroponische Behandlung und die Wurzelbelüftung für eine aeroponische Behandlung (29a) umfasst.

10. Pflanzenproduktionssystem (10) nach einem der vorhergehenden Ansprüche, ferner umfassend eine Steuerung (29c), wobei der Träger während der Verwendung durch die Steuerung (29c) rekonfigurierbar ist, wodurch der Abstand zwischen einer Leitung und der nächsten Leitung in dem Stapel durch die Steuerung (29c) gemäß einem Plan veränderbar ist.

11. Pflanzenproduktionssystem (10) nach Anspruch 10, wobei die Leitungen im Stapel gruppiert sind und die Steuerung (29c) so konfiguriert ist, dass sie den Abstand zwischen den Leitungen gemäß dem Plan neu konfiguriert, wodurch der Abstand zwischen den Leitungen gemäß dem Plan und ihrer jeweiligen Gruppe variiert.

12. Pflanzenproduktionssystem (10) nach einem der vorhergehenden Ansprüche, ferner umfassend eine Vielzahl von Trägern, die hinsichtlich der Längsachse der Leitungen benachbart montiert sind, wobei die Vielzahl von Trägern so konfiguriert ist, dass sie in Bezug zueinander beweglich sind, um einen Zugang dazwischen zu ermöglichen.

13. Pflanzenproduktionssystem (10) nach einem der vorhergehenden Ansprüche, ferner umfassend ein Beleuchtungssystem (25) an einer Unterseite einer der Leitungen, das konfiguriert ist, um Licht unter die Leitung zu projizieren.

14. Pflanzenproduktionssystem (10) nach Anspruch 13, wenn abhängig von Anspruch 10 oder 11, wobei die Steuerung konfiguriert ist, um das Beleuchtungssystem (25) gemäß dem Plan zu aktivieren.

15. Verfahren zur Pfanzenproduktion, umfassend Halten in einem System nach Anspruch 1 mehrere Leitungen in einer aufgehängten, gestapelten Konfiguration, wobei eine Leitung über einer anderen gestapelt ist, Betreiben des Trägers, um die gestapelten Leitungen in Bezug zueinander zu bewegen, und Aufnehmen und sequentielles Befördern mehrerer Pflanzenschalen (30a, 30b, 30c) entlang eines Weges von einem Ende der jeweiligen Leitung zu einem gegenüberliegenden Ende, wobei eine oder mehrere der Leitungen eine Flüssigkeitsleitung (20) umfassen.

## Revendications

1. - Système de production de végétaux (10), comprenant un support maintenant une pluralité de conduits dans une configuration en suspension, empilée, avec un conduit empilé sur le dessus d'un autre, le support étant actionnable pour déplacer les conduits empilés les uns par rapport aux autres, dans lequel chaque conduit est configuré pour recevoir et transporter séquentiellement une pluralité de plateaux de végétaux (30a, 30b, 30c) le long d'une voie allant d'une extrémité du conduit respectif à une extrémité opposée, un ou plusieurs des conduits comprenant un conduit de liquide (20).

2. - Système de production de végétaux (10) selon la revendication 1, dans lequel chaque conduit comprend une pluralité de roues (15) configurées pour transporter les plateaux de végétaux (30a, 30b, 30c) le long de la voie.

3. - Système de production de végétaux (10) selon la revendication 1, comprenant en outre un plateau de végétaux configuré pour flotter dans le conduit de liquide (20), le conduit de liquide (20) comprenant des parois latérales (21) configurées pour restreindre un mouvement non longitudinal des plateaux de végétaux (30a, 30b, 30c), le conduit de liquide (20) définissant une voie sensiblement linéaire le long de laquelle des plateaux de végétaux flottants (30a, 30b, 30c) flottent de manière séquentielle.

4. - Système de production de végétaux (10) selon la revendication 3, dans lequel une base (22) du conduit de liquide (20) a un profil qui correspond sensiblement à, et guide, un profil de forme correspondante d'une face inférieure de chaque plateau de végétaux flottant (30a, 30b, 30c).

5. - Système de production de végétaux (10) selon la revendication 4, dans lequel le conduit de liquide (20) a une projection longitudinale centrale (24) et chaque plateau de végétaux a une forme sensiblement de "U" inversé pour couvrir la projection longitudinale (24) lorsqu'il se trouve dans le conduit de liquide (20).

6. - Système de production de végétaux (10) selon l'une quelconque des revendications 1 à 5, dans lequel le conduit de liquide (20) comprend un système de propulsion de liquide (28a-e) comprenant une alimentation en liquide (28a) à une première extrémité longitudinale du conduit de liquide (20) et un drain (28b) à une extrémité longitudinale opposée du conduit de liquide (20), ce par quoi un passage du liquide (23a, 23b) dans le conduit de liquide (20) est apte à être commandé par le système de propulsion de liquide (28a-c) afin de créer un courant.

7. - Système de production de végétaux (10) selon la revendication 6, dans lequel le drain (28b) comprend un filtre (28e) configuré pour retirer les déchets à partir du liquide (23a, 23b).

8. - Système de production de végétaux (10) selon la revendication 3, dans lequel chaque plateau de végétaux flottant comprend un support flottant et un support de végétaux, le support de végétaux étant apte à être relié au support flottant, le support flottant étant configuré pour flotter dans le conduit de liquide (20).

9. - Système de production de végétaux (10) selon l'une quelconque des revendications précédentes, comprenant une pluralité de supports de configurations différentes choisies parmi un ensemble comprenant la flottabilité, la hauteur des végétaux, la position des racines des végétaux par rapport au liquide (23a, 23b) dans le conduit pour un traitement hydroponique, et la ventilation des racines pour un traitement aéroponique (29a).

10. - Système de production de végétaux (10) selon l'une quelconque des revendications précédentes, comprenant en outre un dispositif de commande (29c), le support étant reconfigurable en cours d'utilisation par le dispositif de commande (29c), ce par quoi la distance entre un conduit et le conduit suivant dans l'empilement est modifiable par le dispositif de commande (29c) selon un programme.

11. - Système de production de végétaux (10) selon la revendication 10, dans lequel les conduits dans l'empilement sont groupés, le dispositif de commande (29c) étant configuré pour reconfigurer la distance entre les conduits conformément au programme, ce par quoi la distance entre les conduits varie conformément au programme et à leur groupe respectif.

12. - Système de production de végétaux (10) selon l'une quelconque des revendications précédentes, comprenant en outre une pluralité de supports montés adjacents les uns aux autres par rapport à l'axe longitudinal des conduits, les différents supports étant configurés pour être déplaçables les uns par rapport aux autres afin de permettre un accès entre eux.

13. - Système de production de végétaux (10) selon l'une quelconque des revendications précédentes, comprenant en outre un système d'éclairage (25) sur une face inférieure de l'un des conduits configuré pour projeter de la lumière au-dessous du conduit.

14. - Système de production de végétaux (10) selon la revendication 13 lorsqu'elle est dépendante de la revendication 10 ou 11, le dispositif de commande étant configuré pour activer le système d'éclairage (25) conformément au programme.

15. - Procédé de production de végétaux comprenant le maintien, dans un système selon la revendication 1, d'une pluralité de conduits dans une configuration en suspension, empilée, avec un conduit empilé sur le dessus d'un autre, l'actionnement du support pour déplacer les conduits empilés les uns par rapport aux autres et la réception et le transport séquentiel d'une pluralité de plateaux de végétaux (30a, 30b, 30c) le long d'une voie allant d'une extrémité du conduit respectif à une extrémité opposée, un ou plusieurs des conduits comprenant un conduit de liquide (20).
